# EUROPEAN PATENT SPECIFICATION

(11) **EP 2 945 339 B1**
(45) Date of publication and mention of the grant of the patent: **07.02.2018**
(21) Application number: 13875278.7
(22) Date of filing: 17.02.2013
(51) Int. Cl.: H04L 29/06

(54) **METHOD AND DEVICE FOR REGULATING STREAMING MEDIA DATA TRANSMISSION**
VERFAHREN UND VORRICHTUNG ZUR REGELUNG DER DATENÜBERTRAGUNG VON STREAMING-MEDIEN-
PROCÉDÉ ET DISPOSITIF DE RÉGULATION DE LA TRANSMISSION DE DONNÉES MULTIMÉDIAS EN FLUX CONTINU

(43) Date of publication of application: 18.11.2015
(73) Proprietor: Huawei Technologies Co., Ltd., Longgang District Shenzhen, Guangdong 518129 (CN)
(72) Inventor: XIONG, Chunshan, Shenzhen Guangdong 518129 (CN); ZHANG, Lixue, Shenzhen Guangdong 518129 (CN)
(74) Representative: Gill Jennings & Every LLP
(86) International application number: PCT/CN2013/071620
(87) International publication number: WO 2014/124555

(56) References cited:
- CN-A- 1 615 649
- CN-A- 1 791 872
- CN-A- 101 562 737
- CN-A- 102 333 089
- US-A1- 2011 093 605
- US-A1- 2013 019 273
- US-B1- 7 895 629

## Description

### TECHNICAL FIELD

The present invention relates to the field of streaming media communications technologies, and in particular, to a method and an apparatus for adjusting streaming media data transmission.

### BACKGROUND

With the maturity of a 3rd generation mobile communications system (3G) and a 4th generation mobile communications system (4G) in recent years, it has become possible that a user equipment (User Equipment, UE for short), such as a mobile phone or a tablet computer, receives and decodes a video or audio stream in real time. However, compared with a legacy wired communications network, a wireless communication channel exhibits a moresharp change in real time, which causes a fluctuation in real-time streaming media transmission and further affects user experience with video viewing quality or audio listening.

To adapt to a streaming media transmission mechanism in a mobile communication environment and ensure that a UE can smoothly receive streaming media, the prior art provides a Dynamic Adaptive Steaming over HTTP (Dynamic Adaptive Steaming over HTTP, DASH for short) technology. The DASH technology is an HTTP-based streaming media transmission technology and can effectively adapt to a change of a radio channel. It is ensured that even in a poor radio channel environment, a mobile terminal is provided with continuous and uninterrupted streaming media access experience by constantly switching between multiple bit rate versions of same content.

When the number of segments acquired by a UE from a streaming media server by using the DASH technology can already ensure a continuous playback by the UE for a certain time, the UE acquires a streaming media segment still according to a current channel condition. If a current channel condition is poor, the UE continues to acquire streaming media segments with low bit rates according to the DASH technology. Because the number of streaming media segments that have been currently acquired can already ensure a continuous playback for a certain time, these streaming media segments with low bit rates are not played immediately; and when these streaming media segments with low bit rates are played, playback quality of streaming media decreases.

US 2011/093605 and US 2013/019273 both disclose streaming media control methods.

A method and an apparatus for adjusting streaming media data transmission according to the present invention are capable of solving a problem that playback quality of streaming media decreases due to acquiring of excessive segments with low bit rates.

In a first aspect, the present invention provides a method for adjusting streaming media data transmission, comprising:
acquiring by an electronic device a total duration parameter of streaming media, wherein the streaming media is formed by at least one streaming media segment that has not yet been played;
determining by an electronic device, according to the total duration parameter and at least one preset duration threshold, a bit rate of a next streaming media segment to be acquired; and
acquiring (203) by an electronic device a next streaming media segment according to the determined bit rate, wherein the acquiring (201) a total duration parameter of streaming media comprises:
   acquiring a segment duration parameter of a streaming media segment when acquiring the streaming media segment; and
   calculating the total duration parameter of the streaming media by accumulating the segment duration parameter and a segment duration parameter of another streaming media segment that has been acquired and is not yet played.

In the first aspect a first possible implementation manner of the first aspect is further provided, where in the first possible implementation manner of the first aspect,
when the number of the preset duration thresholds is one, the determining, according to the total duration parameter and at least one preset duration threshold, a bit rate of a next streaming media segment to be acquired includes:
determining whether the total duration parameter exceeds the preset duration threshold; and
if the total duration parameter exceeds the preset duration threshold, any of the following is performed,
determining an average bit rate of all streaming media segments that have been acquired as the bit rate of the next streaming media segment to be acquired; or
determining an average bit rate of all streaming media segments that have been acquired and are not played as the bit rate of the next streaming media segment to be acquired; or
determining a bit rate of a streaming media segment whose bit rate is the highest in a media presentation description MPD file as the bit rate of the next streaming media segment to be acquired; or
determining a bit rate that is higher than and closest to a bit rate of the currently acquired streaming media segment as the bit rate of the next streaming media segment to be acquired.

In the first aspect or the first possible implementation manner of the first aspect, a second possible implementation manner of the first aspect is further provided, where in the second possible implementation manner of the first aspect,
when the number of the preset duration thresholds is more than one, the determining, according to the total duration parameter and at least one preset duration threshold, a bit rate of a next streaming media segment includes:
determining whether the total duration parameter exceeds a first threshold and does not exceed a second threshold, where the second threshold is a threshold that is adjacent to the first threshold and greater than the first threshold; and
if the total duration parameter exceeds the first threshold and does not exceed the second threshold, selecting, according to a preset mapping table, a bit rate corresponding to the first threshold as the bit rate of the next streaming media segment to be acquired, where the preset mapping table is used to represent mappings between the first threshold and a bit rate and between the second threshold and a bit rate.

In the first aspect or the first possible or second possible implementation manner of the first aspect, a third possible implementation manner of the first aspect is further provided, where in the third possible implementation manner of the first aspect,
the selecting, according to a preset mapping table, a bit rate corresponding to the first threshold includes that:
a relationship between the bit rate corresponding to the first threshold and a bit rate corresponding to the second threshold in the preset mapping table is as follows:

A difference between the bit rate corresponding to the first threshold and the bit rate corresponding to the second threshold is a fixed value; or
an incremental value of the difference between the bit rate corresponding to the first threshold and the bit rate corresponding to the second threshold is a fixed value.

In a second aspect, the present invention further provides an electronic device, comprising:
an acquiring unit, configured to acquire a total duration parameter of streaming media, wherein the streaming media is formed by at least one streaming media segment that is not yet played; and
a processing unit, configured to determine, according to the total duration parameter acquired by the acquiring unit and at least one preset duration threshold, a bit rate of a next streaming media segment to be acquired; wherein
the acquiring unit is further configured to acquire a next streaming media segment according to the bit rate determined by the processing unit, wherein the acquiring unit comprises: an acquiring subunit, configured to acquire a segment duration parameter of a streaming media segment when acquiring the streaming media segment; and
a calculating subunit, configured to calculate the total duration parameter of the streaming media by accumulating the segment duration parameter acquired by the acquiring subunit and a segment duration parameter of another streaming media segment that has been acquired and is not yet played.

In the second aspect a first possible implementation manner of the second aspect is further provided, where in the first possible implementation manner of the second aspect, the processing unit includes:
a judging subunit, configured to determine, when the number of the preset duration thresholds is one, whether the total duration parameter acquired by the acquiring unit exceeds the preset duration threshold; and
a determining subunit, configured to determine, when the judging subunit determines that the total duration parameter exceeds the preset duration threshold, an average bit rate of all streaming media segments that have been acquired as the bit rate of the next streaming media segment to be acquired; or configured to determine an average bit rate of all streaming media segments that have been acquired and are not played as the bit rate of the next streaming media segment to be acquired; or configured to determine a bit rate of a streaming media segment whose bit rate is the highest in an MPD file as the bit rate of the next streaming media segment to be acquired; or configured to determine a bit rate that is higher than and closest to a bit rate of a currently acquired streaming media segment as the bit rate of the next streaming media segment to be acquired.

In the second aspect or the first possible implementation manner of the second aspect, a second possible implementation manner of the second aspect is further provided, where in the second possible implementation manner of the second aspect, the processing unit includes:
a first judging subunit, configured to determine, when the number of the preset duration thresholds is more than one, whether the total duration parameter acquired by the acquiring unit exceeds a first threshold and does not exceed a second threshold, where the second threshold is a threshold that is adjacent to the first threshold and greater than the first threshold;
a selecting subunit, configured to select, when the judging subunit determines that the total duration parameter exceeds the first threshold and does not exceed the second threshold, a bit rate corresponding to the first threshold according to a preset mapping table, where the preset mapping table is used to represent mappings between the first threshold and a bit rate and between the second threshold and a bit rate; and
a first determining subunit, configured to use the bit rate selected by the selecting subunit as the bit rate of the next streaming media segment to be acquired.

In the second aspect or the first possible or second possible implementation manner of the second aspect, a third possible implementation manner of the second aspect is further provided, where in the third possible implementation manner of the second aspect, the processing unit further includes:
a presetting subunit, configured to preset a mapping table, where the preset mapping table is used to represent mappings between the first threshold and a bit rate and between the second threshold and a bit rate.

In the second aspect or the first possible, second possible or third possible implementation manner of the second aspect, a fourth possible implementation manner of the second aspect is further provided, where in the fourth possible implementation manner of the second aspect, the presetting subunit is specifically configured to:
set a difference between the bit rate corresponding to the first threshold and a bit rate corresponding to the second threshold to a fixed value; or
set an incremental value of the difference between the bit rate corresponding to the first threshold and the bit rate corresponding to the second threshold to a fixed value.

In the methods and the apparatuses for adjusting streaming media data transmission according to the present invention, a bit rate of a next streaming media segment to be acquired can be determined according to a total duration parameter of streaming media and at least one preset duration threshold, and a next streaming media segment is acquired according to the bit rate, thereby solving a problem that playback quality of the streaming media decreases due to acquiring of excessive segments with low bit rates. In the prior art, continuity of media data played by a UE can be ensured by a DASH technology; however, if a streaming media segment is acquired still according to the DASH technology when a total duration of a streaming media segment that has been acquired by the UE has met a continuity requirement, a problem of low playback quality may occur. In the present invention, when a streaming media segment is acquired, a total duration parameter of streaming media formed by at least one streaming media segment that is not currently played is acquired, and it can be determined, according to the total duration parameter and the at least one preset duration threshold, whether the total duration of the streaming media segment that has been acquired by the UE has met the continuity requirement. When the continuity requirement is met, the bit rate of the next streaming media segment to be acquired may be obtained, where the bit rate relates to playback quality rather than a current channel condition of the UE. When the next streaming media segment acquired according to the bit rate is played, playback quality of a streaming media file can be improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a DASH technology in the prior art;
FIG. 2 is a flowchart of a method for adjusting streaming media data transmission according to an embodiment of the present invention;
FIG. 3 is a flowchart of another method for adjusting streaming media data transmission according to an embodiment of the present invention;
FIG. 4 is a schematic structural diagram of an electronic device according to an embodiment of the present invention;
FIG. 5 is a schematic structural diagram of another electronic device according to an embodiment of the present invention;
FIG. 6 is a schematic structural diagram of another electronic device according to an embodiment of the present invention;
FIG. 7 is a schematic structural diagram of another electronic device according to an embodiment of the present invention;
FIG. 8 is a schematic structural diagram of another electronic device according to an embodiment of the present invention;
FIG. 9 is a schematic structural diagram of another electronic device according to an embodiment of the present invention; and
FIG. 10 is a schematic structural diagram of another electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

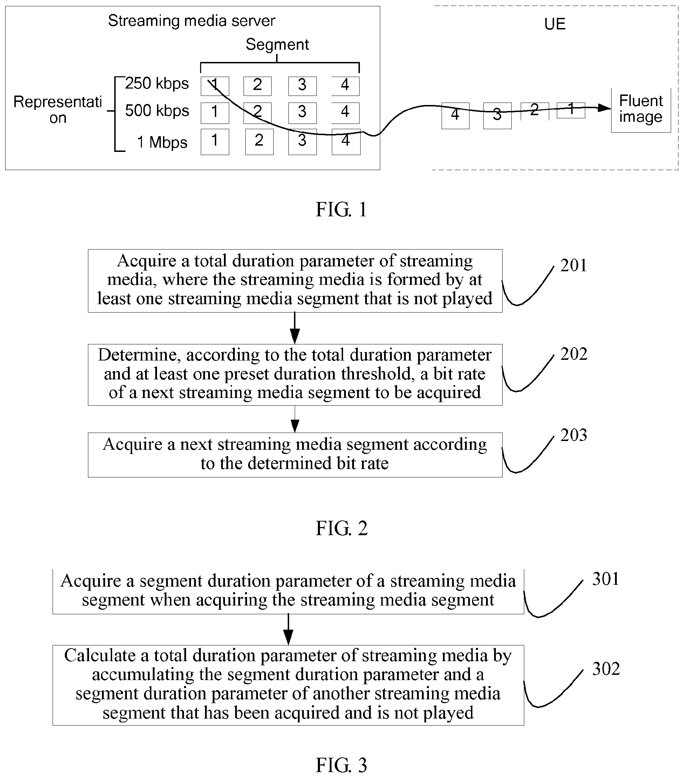

As shown in FIG. 2, an embodiment of the present invention provides a method for adjusting streaming media data transmission, including:
Step 201: Acquire a total duration parameter of streaming media, where the streaming media is formed by at least one streaming media segment that is not played.

To ensure that a streaming media segment that has been acquired and is not played can ensure a continuous playback for a certain time, such as 2 minutes, a total duration parameter of the streaming media segment that has been acquired and is not played needs to be calculated. A UE acquires streaming media segments one by one according to an MPD file, that is, it requests a new streaming media segment after reception is completed. Therefore, acquiring of a streaming media segment may be seen as an opportunity to calculate the total duration parameter. In FIG. 1, it is assumed that a micro film is formed by four streaming media segments and segments "1" and "2" have been acquired by the UE, where the streaming media segment "1" is being played. At this time, the streaming media is the streaming media segment "2". If a duration of "2" is 3 minutes, the continuous playback for the certain time (2 minutes) can be satisfied. Streaming media segments that have been acquired are stored in a buffer or a hard disk, so that the streaming media segments that have been acquired are successively played from the buffer during a playback.

Step 202: Determine, according to the total duration parameter and at least one preset duration threshold, a bit rate of a next streaming media segment to be acquired.

When a streaming media segment is acquired in step 201, the streaming media segment increases a total duration of streaming media that has been acquired. For example, streaming media for 0-10 minutes has been acquired currently; if a duration of the streaming media segment acquired in step 201 is 2 minutes, the total duration of the acquired streaming media segments is 12 minutes. If the total duration parameter of the streaming media is less than any preset duration threshold at this time, a streaming media segment is acquired by following a DASH technology. If the total duration parameter of the streaming media is greater than at least one preset duration threshold at this time, the streaming media can ensure a continuous playback for a certain time, and the bit rate of the next streaming media segment to be acquired is determined.

Step 203: Acquire a next streaming media segment according to the determined bit rate.

A streaming media segment corresponding to the bit rate that is determined in step 202 for the next streaming media segment to be acquired is requested from a streaming media server by using an HTTP request.

In the method for adjusting streaming media data transmission according to this embodiment of the present invention, a bit rate of a next streaming media segment to be acquired can be determined according to a total duration parameter of streaming media and at least one preset duration threshold, and a next streaming media segment is acquired according to the bit rate, thereby solving a problem that playback quality of the streaming media decreases due to acquiring of excessive segments with low bit rates. In the prior art, continuity of media data played by a UE can be ensured by a DASH technology; however, if a streaming media segment is acquired still according to the DASH technology when a total duration of a streaming media segment that has been acquired by the UE has met a continuity requirement, a problem of low playback quality may occur. In the present invention, when a streaming media segment is acquired, a total duration parameter of streaming media formed by at least one streaming media segment that is not currently played is acquired, and it can be determined, according to the total duration parameter and the at least one preset duration threshold, whether the total duration of the streaming media segment that has been acquired by the UE has met the continuity requirement. When the continuity requirement is met, the bit rate of the next streaming media segment to be acquired may be obtained, where the bit rate relates to playback quality rather than a current channel condition of the UE. When the next streaming media segment acquired according to the bit rate is played, playback quality of a streaming media file can be improved.

An embodiment of the present invention provides another method for adjusting streaming media data transmission. As shown in FIG. 3, this embodiment specifically describes step 201, and the step 201 specifically includes:
Step 301: Acquire a segment duration parameter of a streaming media segment when acquiring the streaming media segment.

When a streaming media segment is acquired, a segment duration parameter of the streaming media segment can be acquired from a file header of the streaming media segment.

Step 302: Calculate a total duration parameter of streaming media by accumulating the segment duration parameter and a segment duration parameter of another streaming media segment that has been acquired and is not played.

If 10 streaming media segments have been acquired and streaming media segments "3" to "10" are not played, the streaming media is formed by the eight streaming media segments "3" to "10" at this time. The total duration parameter of the streaming media is a sum of segment duration parameters of the streaming media segments "3" to "10", for example, 15 minutes. If a streaming media segment "11" is acquired in step 301 and a segment duration parameter of the streaming media segment "11" is 3 minutes, the total duration parameter of the streaming media is 3 + 15 = 18 minutes.

Besides being indicated by time (minutes), the segment duration parameter may also be indicated by progress (a percentage of total progress). For example, the total duration parameter of the streaming media is a sum of the segment duration parameters of the streaming media segments "3" to "10", for example, 50%. If the streaming media segment "11" is acquired in step 301 and the segment duration parameter of the streaming media segment "11" is 20%, the total duration parameter of the streaming media is 70%.

In the another method for adjusting streaming media data transmission according to this embodiment of the present invention, a total duration parameter is obtained by accumulating segment duration parameters, and it can be determined, according to the total duration parameter, whether to follow a DASH technology.

An embodiment of the present invention provides another method for adjusting streaming media data transmission. This embodiment specifically describes step 202. When the number of the preset duration thresholds is one, step 202 includes:
determining whether the total duration parameter exceeds the preset duration threshold; and
if the total duration parameter exceeds the preset duration threshold,
manner 1: determining an average bit rate of all streaming media segments that have been acquired as the bit rate of the next streaming media segment to be acquired; or
manner 2: determining an average bit rate of all streaming media segments that have been acquired and are not played as the bit rate of the next streaming media segment to be acquired; or
manner 3: determining a bit rate of a streaming media segment whose bit rate is the highest in an MPD file as the bit rate of the next streaming media segment to be acquired; or
manner 4: determining a bit rate that is higher than and closest to a bit rate of a currently acquired streaming media segment as the bit rate of the next streaming media segment to be acquired.

The following further describes the four manners by using a scenario provided in this embodiment of the present invention.

A UE has acquired nine streaming media segments, namely, streaming media segments "1" to "9". The streaming media segments "1" and "2" have been played, the streaming media segments "3" to "9" are not played, and a total duration parameter of streaming media formed by the streaming media segments "3" to "9" is 12 minutes. When a streaming media segment "10" is received, if a segment duration parameter of the streaming media segment "10" is 2 minutes and the preset duration threshold is 13 minutes, the total duration parameter of the streaming media is 2 + 12 = 14 minutes, that is, the total duration parameter (14) exceeds the preset duration threshold (13). If the bit rate for each of the streaming media segments "1" and "2" is 250 kbps, the bit rate for each of the streaming media segments "3" to "10" is 500 kbps, and a highest bit rate that can be selected from the MPD file is 1 Mbps, the bit rate of the next streaming media segment to be acquired is determined as follows:
Manner 1: The average bit rate of all the streaming media segments that have been acquired is calculated. The average bit rate is (2*250 + 8*500) ÷ 10 = 450 kbps. The bit rate of the next streaming media segment to be acquired is determined as 450 kbps.
Manner 2: The average bit rate of all the streaming media segments that have been acquired and are not played is calculated. The average bit rate is 8*500 ÷ 5 = 500 kbps. The bit rate of the next streaming media segment to be acquired is determined as 500 kbps.
Manner 3: The bit rate of the streaming media segment whose bit rate is the highest in the MPD file is determined as the bit rate of the next streaming media segment to be acquired, that is, 1 Mbps is determined as the bit rate of the next streaming media segment to be acquired.
Manner 4: If the MPD file further provides 600 kbps, 700 kbps, 800 kbps, and 900 kbps streaming media segments in addition to 250 kbps, 500 kbps, and 1 Mbps, a bit rate that is higher than and closest to a bit rate of the currently acquired streaming media segment is determined as the bit rate of the next streaming media segment to be acquired, that is, due to that a bit rate of the streaming media segment "10" is 500 kbps, 600 kbps that is adjacent to and higher than 500 kbps is selected.

In the another method for adjusting streaming media data transmission according to this embodiment of the present invention, a segment duration parameter of an acquired streaming media segment can be extracted from the streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not currently played can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. The bit rate of the next streaming media segment to be acquired can be determined in manners 1 to 4 only when the number of the preset duration thresholds is one. Manners 1 to 4 provide different manners for determining the bit rate and achieve an effect of providing the bit rate of the next streaming media segment to be acquired, and a streaming media segment with a high bit rate can be acquired according to the bit rate, thereby improving the streaming media playback quality.

An embodiment of the present invention provides another method for adjusting streaming media data transmission. This embodiment specifically describes step 202. When the number of the preset duration thresholds is more than one, step 202 includes:
determining whether the total duration parameter exceeds a first threshold and does not exceed a second threshold, where the second threshold is a threshold that is adjacent to the first threshold and greater than the first threshold; and
if the total duration parameter exceeds the first threshold and does not exceed the second threshold, selecting, according to a preset mapping table, a bit rate corresponding to the first threshold as the bit rate of the next streaming media segment to be acquired, where the preset mapping table is used to represent mappings between the first threshold and a bit rate and between the second threshold and a bit rate.

A relationship between the bit rate corresponding to the first threshold and a bit rate corresponding to the second threshold in the preset mapping table is as follows:

A difference between the bit rate corresponding to the first threshold and the bit rate corresponding to the second threshold is a fixed value; or
an incremental value of the difference between the bit rate corresponding to the first threshold and the bit rate corresponding to the second threshold is a fixed value.

When the difference between the bit rate corresponding to the first threshold and the bit rate corresponding to the second threshold is a fixed value, the preset mapping table is shown in table 1, where mappings between multiple preset duration thresholds and bit rates are included, and the difference between the bit rate corresponding to the first threshold and the bit rate corresponding to the second threshold is the fixed value 60 kbps. In this case, the preset duration thresholds have a linear relationship with the bit rates.

**Table 1**

| Preset Mapping Table | |
|---|---|
| Preset duration threshold (minutes) | Bit rate (kbps) |
| 0.5 | 60 |
| 1 | 120 |
| 1.5 | 180 |
| 2 | 240 |
| 2.5 | 300 |

If the total duration parameter acquired in step 201 is 0.7 minute, the first threshold is 0.5 minute, and the second threshold is 1 minute in this case, a bit rate 60 kbps corresponding to the first threshold 0.5 minute is selected as the bit rate of the next streaming media segment to be acquired. If the total duration parameter acquired in step 201 is 1.3 minutes, the first threshold is 1 minute, and the second threshold is 1.5 minutes in this case, a bit rate 180 kbps corresponding to the first threshold 1.5 minutes is selected as the bit rate of the next streaming media segment to be acquired.

When the incremental value of the difference between the bit rate corresponding to the first threshold and the bit rate corresponding to the second threshold is a fixed value, the preset mapping table is shown in table 2, where mappings between multiple preset duration thresholds and bit rates are included, the incremental value of the difference between the bit rate corresponding to the first threshold and the bit rate corresponding to the second threshold is the fixed value 20 kbps, and a starting difference is 60. In this case, the preset duration thresholds have a non-linear relationship with the bit rates.

**Table 2**

| Preset Mapping Table | |
|---|---|
| Preset duration threshold (minutes) | Bit rate (kbps) |
| 0.5 | 60 |
| 1 | 120 |
| 1.5 | 200 |
| 2 | 300 |
| 2.5 | 420 |

If the total duration parameter acquired in step 201 is 0.7 minute, the first threshold is 0.5 minute, and the second threshold is 1 minute in this case, a bit rate 60 kbps corresponding to the first threshold 0.5 minute is selected as the bit rate of the next streaming media segment to be acquired. If the total duration parameter acquired in step 201 is 1.3 minutes, the first threshold is 1 minute, and the second threshold is 1.5 minutes in this case, a bit rate 420 kbps corresponding to the first threshold 1.5 minutes is selected as the bit rate of the next streaming media segment to be acquired.

The mappings between the preset duration thresholds and the bit rates in the preset mapping table may also be mappings in another function, for example, a quadratic function and a logarithmic function, which is not limited herein.

In the method for adjusting streaming media data transmission according to this embodiment of the present invention, a segment duration parameter of an acquired streaming media segment can be extracted from the streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not currently played can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is at least one, the bit rate of the next streaming media segment to be acquired can be determined by determining whether the total duration parameter exceeds a first threshold and does not exceed a second threshold. In this way, a different bit rate of the next streaming media segment to be acquired is determined according to a different total duration parameter so as to improve playback quality, where a larger total duration parameter leads to a higher bit rate.

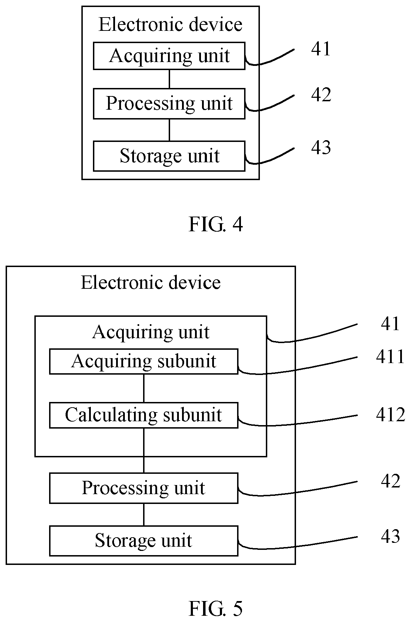

As shown in FIG. 4, an embodiment of the present invention provides an electronic device, including an acquiring unit 41 and a processing unit 42.

The acquiring unit 41 is configured to acquire a total duration parameter of streaming media, where the streaming media is formed by at least one streaming media segment that is not played.

To ensure that a streaming media segment that has been acquired and is not played can ensure a continuous playback for a certain time, such as 2 minutes, a total duration parameter of the streaming media segment that has been acquired and is not played needs to be calculated. The acquiring unit 41 acquires streaming media segments one by one according to an MPD file, that is, it requests a new streaming media segment after reception is completed. Therefore, acquiring of a streaming media segment may be seen as an opportunity to calculate the total duration parameter. In FIG. 1, it is assumed that a micro film is formed by four streaming media segments and segments "1" and "2" have been acquired by the acquiring unit 41, where the streaming media segment "1" is being played. At this time, the streaming media is the streaming media segment "2". If a duration of "2" is 3 minutes, the continuous playback for the certain time (2 minutes) can be satisfied. Streaming media segments that have been acquired are stored in a storage unit 43, for example, a buffer or a hard disk, so that the streaming media segments that have been acquired are successively played from the storage unit 43 during a playback.

The processing unit 42 is configured to determine, according to the total duration parameter acquired by the acquiring unit 41 and at least one preset duration threshold, a bit rate of a next streaming media segment to be acquired.

When the acquiring unit 41 acquires a streaming media segment, a total duration of streaming media segments that can be played by the processing unit 42 increases. If the total duration parameter of the streaming media is less than any duration threshold at this time, the processing unit 42 acquires a streaming media segment by following a DASH technology. If the total duration parameter of the streaming media is greater than at least one preset duration threshold at this time, the streaming media can ensure a continuous playback for a certain time, and the processing unit 42 determines the bit rate of the next streaming media segment to be acquired.

The acquiring unit 41 is further configured to acquire a next streaming media segment according to the bit rate determined by the processing unit 42.

The acquiring unit 41 requests, from a streaming media server by using an HTTP request, a streaming media segment corresponding to the bit rate that is determined by the processing unit 42 for the next streaming media segment to be acquired.

In the electronic device according to this embodiment of the present invention, a processing unit 42 is capable of determining, according to a total duration parameter of streaming media and at least one preset duration threshold, a bit rate of a next streaming media segment to be acquired, and an acquiring unit 41 acquires a next streaming media segment according to the bit rate determined by the processing unit 42, thereby solving a problem that playback quality of the streaming media decreases due to acquiring of excessive segments with low bit rates. In the prior art, continuity of media data played by a UE can be ensured by a DASH technology; however, if a streaming media segment is acquired still according to the DASH technology when a total duration of a streaming media segment that has been acquired has met a continuity requirement, a problem of low playback quality may occur. In the present invention, the acquiring unit 41 acquires a total duration parameter of streaming media formed by at least one streaming media segment that is not currently played when acquiring a streaming media segment, and the processing unit 42 may determine, according to the total duration parameter and the at least one preset duration threshold, whether the total duration of the streaming media segment that has been acquired has met the continuity requirement. When the continuity requirement is met, the processing unit 42 may obtain the bit rate of the next streaming media segment to be acquired, where the bit rate relates to playback quality rather than a current channel condition of the UE. When the processing unit 42 plays the next streaming media segment that is acquired by the acquiring unit 41 according to the bit rate, playback quality of a streaming media file can be improved.

This embodiment further describes the acquiring unit 41 in the embodiment shown in FIG. 4. As shown in FIG. 5, the acquiring unit 41 includes:
an acquiring subunit 411, configured to acquire a segment duration parameter of a streaming media segment when acquiring the streaming media segment; and
a calculating subunit 412, configured to calculate the total duration parameter of the streaming media by accumulating the segment duration parameter acquired by the acquiring subunit 411 and a segment duration parameter of another streaming media segment that has been acquired and is not played.

When acquiring a streaming media segment, the acquiring subunit 411 may acquire a segment duration parameter of the streaming media segment from a file header of the streaming media segment. The calculating subunit 412 obtains the total duration parameter of the streaming media after accumulating the segment duration parameter acquired by the acquiring subunit 411.

If 10 streaming media segments have been acquired and streaming media segments "3" to "10" are not played, the streaming media is formed by the eight streaming media segments "3" to "10" at this time. The total duration parameter of the streaming media is a sum of segment duration parameters of the streaming media segments "3" to "10", for example, 15 minutes. If the acquiring subunit 411 acquires a streaming media segment "11" and a segment duration parameter of the streaming media segment "11" is 3 minutes, the total duration parameter of the streaming media calculated by the calculating subunit 412 is 3 + 15 = 18 minutes.

Besides being indicated by time (minutes), the segment duration parameter may also be indicated by progress (a percentage of total progress).

In the another electronic device according to this embodiment of the present invention, a calculating subunit 412 obtains a total duration parameter by accumulating segment duration parameters, and it can be determined, according to the total duration parameter, whether to follow a DASH technology.

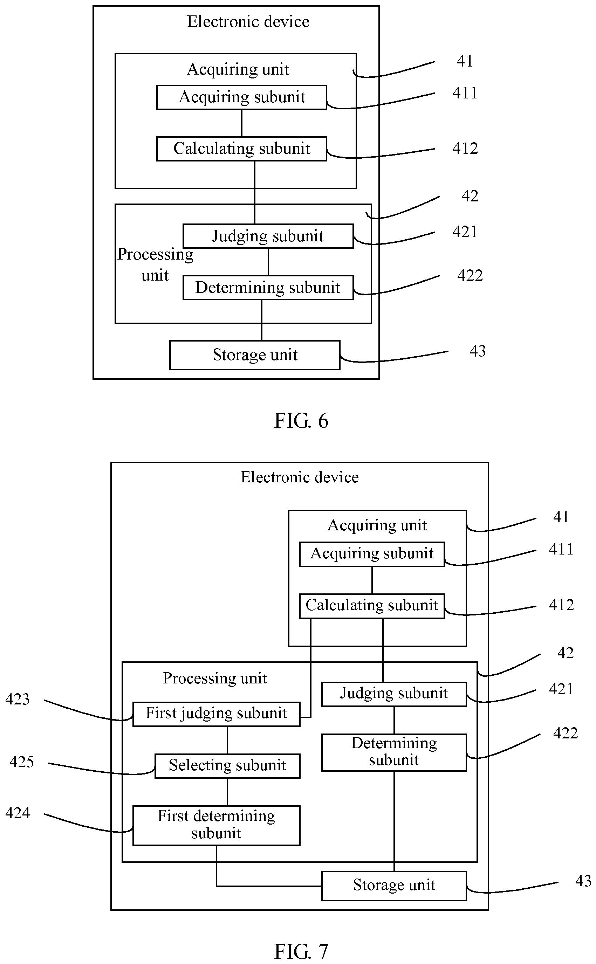

This embodiment further describes the processing unit 42 in the embodiment shown in FIG. 4. As shown in FIG. 6, the processing unit 42 includes:
a judging subunit 421, configured to determine, when the number of the preset duration thresholds is one, whether the total duration parameter acquired by the acquiring unit 41 exceeds the preset duration threshold; and
a determining subunit 422, configured to determine, when the judging subunit 421 determines that the total duration parameter exceeds the preset duration threshold, an average bit rate of all streaming media segments that have been acquired as the bit rate of the next streaming media segment to be acquired; or configured to determine an average bit rate of all streaming media segments that have been acquired and are not played as the bit rate of the next streaming media segment to be acquired; or configured to determine a bit rate of a streaming media segment whose bit rate is the highest in an MPD file as the bit rate of the next streaming media segment to be acquired; or configured to determine a bit rate that is higher than and closest to a bit rate of a currently acquired streaming media segment as the bit rate of the next streaming media segment to be acquired.

The judging subunit 421 determines whether the total duration parameter acquired by the acquiring unit 41 exceeds the preset duration threshold; and
when the total duration parameter exceeds the preset duration threshold,
manner 1: The determining subunit 422 determines an average bit rate of all streaming media segments that have been acquired as the bit rate of the next streaming media segment to be acquired;
manner 2: The determining subunit 422 determines an average bit rate of all streaming media segments that have been acquired and are not played as the bit rate of the next streaming media segment to be acquired;
manner 3: The determining subunit 422 determines a bit rate of a streaming media segment whose bit rate is the highest in an MPD file as the bit rate of the next streaming media segment to be acquired; and
manner 4: The determining subunit 422 determines a bit rate that is higher than and closest to a bit rate of a currently acquired streaming media segment as the bit rate of the next streaming media segment to be acquired.

In the another electronic device according to this embodiment of the present invention, an acquiring unit 41 is capable of extracting a segment duration parameter of an acquired streaming media segment from the acquired streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not played currently can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is one, a determining subunit 422 is capable of determining, in manners 1 to 4, the bit rate of the next streaming media segment to be acquired. The acquiring unit 41 may acquire a streaming media segment with a high bit rate according to the bit rate determined by the determining subunit 422, thereby improving the streaming media playback quality.

This embodiment further describes the processing unit 42 in the embodiment shown in FIG. 4. As shown in FIG. 7, the processing unit 42 includes:
a first judging subunit 423, configured to determine, when the number of the preset duration thresholds is more than one, whether the total duration parameter acquired by the acquiring unit 41 exceeds a first threshold and does not exceed a second threshold, where the second threshold is a threshold that is adjacent to the first threshold and greater than the first threshold;
a selecting subunit 425, configured to select, according to a preset mapping table when the judging subunit 421 determines that the total duration parameter exceeds the first threshold and does not exceed the second threshold, a bit rate corresponding to the first threshold, where the preset mapping table is used to represent mappings between the first threshold and a bit rate and between the second threshold and a bit rate; and
a first determining subunit 424, configured to use the bit rate selected by the selecting subunit 425 as the bit rate of the next streaming media segment to be acquired.

In the another electronic device according to this embodiment of the present invention, a first judging subunit 423 is capable of determining, according to at least two preset duration thresholds, whether the preset duration threshold exceeds a first threshold and does not exceed a second threshold, and a selecting subunit 425 may determine, according to a judgment result of the first judging subunit 423, a bit rate corresponding to the current total duration parameter, further improving streaming media playback quality.

In the another electronic device according to this embodiment of the present invention, an acquiring unit 41 is capable of extracting a segment duration parameter of an acquired streaming media segment from the acquired streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not played currently can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is at least one, after a first judging subunit 423 determines whether the total duration parameter exceeds a first threshold and does not exceed a second threshold, a selecting subunit 425 may select, according to a preset mapping table, a bit rate corresponding to the first threshold, and then a first determining subunit 424 may determine the bit rate selected by the selecting subunit 425 as the bit rate of the next streaming media segment to be acquired. In this way, a different bit rate of the next streaming media segment to be acquired is determined according to a different total duration parameter so as to improve playback quality, where a larger total duration parameter leads to a higher bit rate.

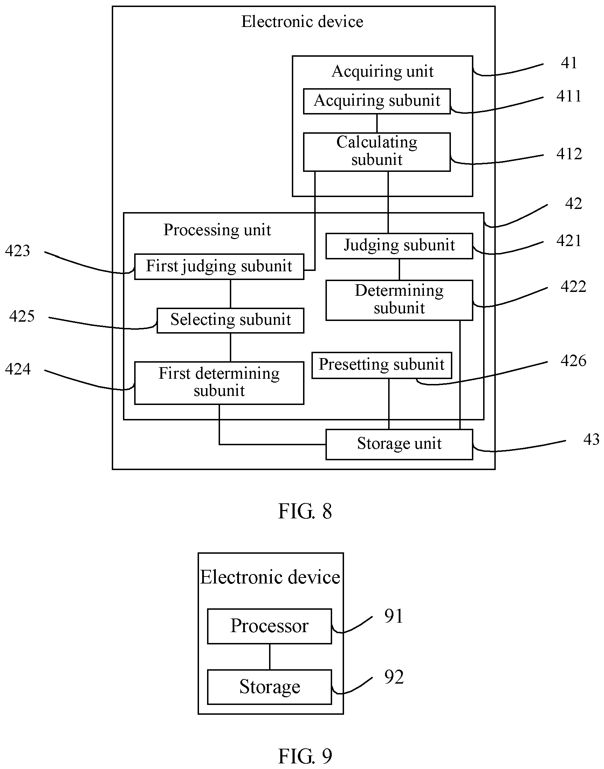

This embodiment further describes the processing unit 42 in the embodiment shown in FIG. 4. As shown in FIG. 8, the processing unit 42 further includes:
a presetting subunit 426, configured to preset a mapping table, where the preset mapping table is used to represent mappings between the first threshold and a bit rate and between the second threshold and a bit rate.

This embodiment further describes the processing unit 42 in the embodiment shown in FIG. 4. The presetting subunit 426 is specifically configured to:
set a difference between the bit rate corresponding to the first threshold and a bit rate corresponding to the second threshold to a fixed value; or
set an incremental value of the difference between the bit rate corresponding to the first threshold and the bit rate corresponding to the second threshold to a fixed value.

In the another electronic device according to this embodiment of the present invention, an acquiring unit 41 is capable of extracting a segment duration parameter of an acquired streaming media segment from the acquired streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not played currently can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is at least one, after a first judging subunit 423 determines whether the total duration parameter exceeds a first threshold and does not exceed a second threshold, a selecting subunit 425 may select, according to a preset mapping table, a bit rate corresponding to the first threshold, and then a first determining subunit 424 may determine the bit rate selected by the selecting subunit 425 as the bit rate of the next streaming media segment to be acquired. In this way, a different bit rate of the next streaming media segment to be acquired is determined according to a different total duration parameter so as to improve playback quality, where a larger total duration parameter leads to a higher bit rate.

As shown in FIG. 9, an embodiment of the present invention provides another electronic device, including:
a processor 91, configured to: acquire a total duration parameter of streaming media, where the streaming media is formed by at least one streaming media segment that is not played;
determine, according to the acquired total duration parameter and at least one preset duration threshold, a bit rate of a next streaming media segment to be acquired; and
acquire a next streaming media segment according to the determined bit rate.

To ensure that a streaming media segment that has been acquired and is not played can ensure a continuous playback for a certain time, such as 2 minutes, a total duration parameter of the streaming media segment that has been acquired and is not played needs to be calculated. The processor 91 acquires streaming media segments one by one according to an MPD file, that is, it requests a new streaming media segment after reception is completed. Therefore, acquiring of a streaming media segment may be seen as an opportunity to calculate the total duration parameter. In FIG. 1, it is assumed that a micro film is formed by four streaming media segments and segments "1" and "2" have been acquired by the processor 91, where the streaming media segment "1" is being played. At this time, the streaming media is the streaming media segment "2". If a duration of "2" is 3 minutes, the continuous playback for the certain time (2 minutes) can be satisfied. Streaming media segments that have been acquired are stored in a storage 92, for example, a buffer or a hard disk, so that the streaming media segments that have been acquired are successively played from the storage 92 during a playback.

When a streaming media segment is acquired, a total duration of streaming media segments that can be played by the processor 91 increases. If the total duration parameter of the streaming media is less than any duration threshold at this time, the processor 91 acquires a streaming media segment by following a DASH technology. If the total duration parameter of the streaming media is greater than at least one preset duration threshold at this time, the streaming media can ensure a continuous playback for a certain time, and then the processor 91 determines the bit rate of the next streaming media segment to be acquired.

The processor 91 requests, from a streaming media server by using an HTTP request, a streaming media segment corresponding to the determined bit rate of the next streaming media segment to be acquired.

In the electronic device according to this embodiment of the present invention, the processor 91 is capable of determining, according to a total duration parameter of streaming media and at least one preset duration threshold, a bit rate of a next streaming media segment to be acquired and acquiring a next streaming media segment according to the determined bit rate, thereby solving a problem that playback quality of the streaming media decreases due to acquiring of excessive segments with low bit rates. In the prior art, continuity of media data played by a UE can be ensured by a DASH technology; however, if a streaming media segment is acquired still according to the DASH technology when a total duration of a streaming media segment that has been acquired has met a continuity requirement, a problem of low playback quality may occur. In the present invention, when acquiring a streaming media segment, the processor 91 acquires a total duration parameter of streaming media formed by at least one streaming media segment that is not played currently and may determine, according to the total duration parameter and the at least one preset duration threshold, whether the total duration of the streaming media segment that has been acquired has met the continuity requirement. When the continuity requirement is met, the bit rate of the next streaming media segment to be acquired may be obtained, where the bit rate relates to playback quality rather than a current channel condition of the UE. When the next streaming media segment acquired according to the bit rate is played, playback quality of a streaming media file can be improved.

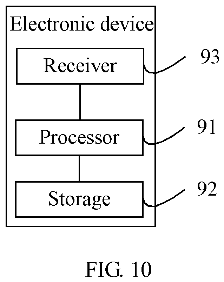

This embodiment is similar to the embodiment shown in FIG. 9. As shown in FIG. 10, a difference lies in that the electronic device further includes:
a receiver 93, configured to receive the streaming media segment; and
a storage 92, configured to store the streaming media segment received by the receiver 93.

The processor 91 is further configured to: when the receiver 93 receives a streaming media segment, acquire a segment duration parameter of the streaming media segment from the storage 92; and
calculate the total duration parameter of the streaming media by accumulating the segment duration parameter acquired by the acquiring subunit and a segment duration parameter of another streaming media segment that has been acquired and is not played.

When the receiver 93 receives a streaming media segment, the receiver 93 sends the streaming media segment to the storage 92 for storage, and the processor 91 obtains the streaming media segment through the storage 92 and may acquire a segment duration parameter of the streaming media segment from a file header of the streaming media segment. The processor 91 obtains the total duration parameter of the streaming media after accumulating the acquired segment duration parameter.

If 10 streaming media segments have been acquired and streaming media segments "3" to "10" are not played, the streaming media is formed by the eight streaming media segments "3" to "10" at this time. The total duration parameter of the streaming media is a sum of segment duration parameters of the streaming media segments "3" to "10", for example, 15 minutes. If the processor 91 acquires a streaming media segment "11" and a segment duration parameter of the streaming media segment "11" is 3 minutes, the calculated total duration parameter of the streaming media is 3 + 15 = 18 minutes.

Besides being indicated by time (minutes), the segment duration parameter may also be indicated by progress (a percentage of total progress).

This embodiment further describes the processor 91 in the embodiment shown in FIG. 9. The processor 91 is further configured to:
when the number of the preset duration thresholds is one, determine whether the total duration parameter acquired by the receiver 93 exceeds the preset duration threshold; and
when a judging subunit determines that the total duration parameter exceeds the preset duration threshold, determine an average bit rate of all streaming media segments that have been acquired as the bit rate of the next streaming media segment to be acquired; or configured to determine an average bit rate of all streaming media segments that have been acquired and are not played as the bit rate of the next streaming media segment to be acquired; or configured to determine a bit rate of a streaming media segment whose bit rate is the highest in an MPD file as the bit rate of the next streaming media segment to be acquired; or configured to determine a bit rate that is higher than and closest to a bit rate of a currently acquired streaming media segment as the bit rate of the next streaming media segment to be acquired.

In the another electronic device according to this embodiment of the present invention, a processor 91 is capable of extracting a segment duration parameter of an acquired streaming media segment from the acquired streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not played currently can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is one, the processor 91 may determine, in manners 1 to 4, the bit rate of the next streaming media segment to be acquired and acquiring a streaming media segment with a high bit rate according to the determined bit rate, thereby improving the streaming media playback quality.

This embodiment further describes the processor 91 in the embodiment shown in FIG. 9. The processor 91 is further configured to:
when the number of the preset duration thresholds is more than one, determine whether the total duration parameter acquired by the receiver 93 exceeds a first threshold and does not exceed a second threshold, where the second threshold is a threshold that is adjacent to the first threshold and greater than the first threshold;
select, according to a preset mapping table when the judging subunit determines that the total duration parameter exceeds the first threshold and does not exceed the second threshold, a bit rate corresponding to the first threshold, where the preset mapping table is used to represent mappings between the first threshold and a bit rate and between the second threshold and a bit rate; and
use the bit rate selected by a selecting subunit as the bit rate of the next streaming media segment to be acquired.

In the another electronic device according to this embodiment of the present invention, a processor 91 is capable of determining, according to at least two preset duration thresholds, a bit rate corresponding to a current total duration parameter, further improving streaming media playback quality.

This embodiment further describes the processor 91 in the embodiment shown in FIG. 9. The processor 91 is further configured to:
preset a mapping table, where the preset mapping table is used to represent mappings between the first threshold and a bit rate and between the second threshold and a bit rate.

The processor 91 is further configured to:
set a difference between the bit rate corresponding to the first threshold and a bit rate corresponding to the second threshold to a fixed value; or
set an incremental value of the difference between the bit rate corresponding to the first threshold and the bit rate corresponding to the second threshold to a fixed value.

In the another electronic device according to this embodiment of the present invention, a processor 91 is capable of extracting a segment duration parameter of an acquired streaming media segment from the acquired streaming media segment, a total duration parameter of streaming media may be calculated by accumulating the segment duration parameter and a segment duration parameter of another streaming media segment that has been acquired and is not played, and the total duration parameter may be indicated by time and may also be indicated by playback progress, so that streaming media that is not played currently can be monitored through the total duration parameter. In the prior art, that is, in a DASH technology, a bit rate of a next streaming media segment to be acquired is not adjusted according to a total duration parameter of a streaming media segment that has been acquired, which is likely to result in a low bit rate segment continuing to be acquired when the streaming media segment that has been acquired meets a continuity requirement, thereby reducing streaming media playback quality. When the number of the preset duration thresholds is at least one, after determining whether the total duration parameter exceeds a first threshold and does not exceed a second threshold, the processor 91 may select, according to a preset mapping table, a bit rate corresponding to the first threshold and determine the selected bit rate as the bit rate of the next streaming media segment to be acquired. In this way, a different bit rate of the next streaming media segment to be acquired is determined according to a different total duration parameter so as to improve playback quality, where a larger total duration parameter leads to a higher bit rate.

It may be clearly understood by a person skilled in the art that, for the purpose of convenient and brief description, division of the foregoing function modules is taken as an example for illustration, and in actual implementation, the foregoing functions can be allocated to different modules and implemented according to an need, that is, an inner structure of an apparatus is divided into different function modules to implement all or part of the functions described above. For a detailed working process of the foregoing systems, apparatuses and units, reference may be made to a corresponding process in the method embodiments, and details are not described herein again.

In the several embodiments provided in the present application, it should be understood that the disclosed systems, apparatuses, and methods may be implemented in other manners. For example, the described apparatus embodiments are merely exemplary. For example, the division of modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Apart of or all of the units may be selected according to an actual need to achieve the objectives of the solutions of the embodiments.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for adjusting streaming media data transmission, comprising:
acquiring (201) by an electronic device a total duration parameter of streaming media, wherein the streaming media is formed by at least one streaming media segment that has not yet been played;
determining (202) by an electronic device, according to the total duration parameter and at least one preset duration threshold, a bit rate of a next streaming media segment to be acquired; and
acquiring (203) by an electronic device a next streaming media segment according to the determined bit rate, wherein
the acquiring (201) a total duration parameter of streaming media comprises:
acquiring (301) a segment duration parameter of a streaming media segment when acquiring the streaming media segment; and
calculating (302) the total duration parameter of the streaming media by accumulating the segment duration parameter and a segment duration parameter of another streaming media segment that has been acquired and is not yet played.

2. The method according to claim 1, wherein when the number of the preset duration thresholds is one, the determining, according to the total duration parameter and at least one preset duration threshold, a bit rate of a next streaming media segment comprises:
determining whether the total duration parameter exceeds the preset duration threshold; and
if the total duration parameter exceeds the preset duration threshold, any of the following is performed:
determining an average bit rate of all streaming media segments that have been acquired as the bit rate of the next streaming media segment to be acquired; or
determining an average bit rate of all streaming media segments that have been acquired and are not played as the bit rate of the next streaming media segment to be acquired; or
determining a bit rate of a streaming media segment whose bit rate is the highest in a media presentation description MPD file as the bit rate of the next streaming media segment to be acquired; or
determining a bit rate that is higher than and closest to a bit rate of a currently acquired streaming media segment as the bit rate of the next streaming media segment to be acquired.

3. The method according to claim 1, wherein when the number of the preset duration thresholds is more than one, the determining, according to the total duration parameter and at least one preset duration threshold, a bit rate of a next streaming media segment comprises:
determining whether the total duration parameter exceeds a first threshold and does not exceed a second threshold, wherein the second threshold is a threshold that is adjacent to the first threshold and greater than the first threshold; and
if the total duration parameter exceeds the first threshold and does not exceed the second threshold, selecting, according to a preset mapping table, a bit rate corresponding to the first threshold as the bit rate of the next streaming media segment to be acquired, wherein the preset mapping table is used to represent mappings between the first threshold and a bit rate and between the second threshold and a bit rate.

4. An electronic device, comprising:
an acquiring unit (41), configured to acquire a total duration parameter of streaming media, wherein the streaming media is formed by at least one streaming media segment that is not yet played; and
a processing unit (42), configured to determine, according to the total duration parameter acquired by the acquiring unit and at least one preset duration threshold, a bit rate of a next streaming media segment to be acquired; wherein
the acquiring unit is further configured to acquire a next streaming media segment according to the bit rate determined by the processing unit, wherein the acquiring unit comprises:
an acquiring subunit (411), configured to acquire a segment duration parameter of a streaming media segment when acquiring the streaming media segment; and
a calculating subunit (412), configured to calculate the total duration parameter of the streaming media by accumulating the segment duration parameter acquired by the acquiring subunit (411) and a segment duration parameter of another streaming media segment that has been acquired and is not yet played.

5. The electronic device according to claim 4, wherein the processing unit (42) comprises:
a judging subunit (421), configured to determine, when the number of the preset duration thresholds is one, whether the total duration parameter acquired by the acquiring unit exceeds the preset duration threshold; and
a determining subunit (422), configured to determine, when the judging subunit (421) determines that the total duration parameter exceeds the preset duration threshold, an average bit rate of all streaming media segments that have been acquired as the bit rate of the next streaming media segment to be acquired; or configured to determine an average bit rate of all streaming media segments that have been acquired and are not played as the bit rate of the next streaming media segment to be acquired; or configured to determine a bit rate of a streaming media segment whose bit rate is the highest in an MPD file as the bit rate of the next streaming media segment to be acquired; or configured to determine a bit rate that is higher than and closest to a bit rate of a currently acquired streaming media segment as the bit rate of the next streaming media segment to be acquired.

6. The electronic device according to claim 4, wherein the processing unit comprises:
a first judging subunit (423), configured to determine, when the number of the preset duration thresholds is more than one, whether the total duration parameter acquired by the acquiring unit exceeds a first threshold and does not exceed a second threshold, wherein the second threshold is a threshold that is adjacent to the first threshold and greater than the first threshold;
a selecting subunit (425), configured to select, according to a preset mapping table when the judging subunit (421) determines that the total duration parameter exceeds the first threshold and does not exceed the second threshold, a bit rate corresponding to the first threshold, wherein the preset mapping table is used to represent mappings between the first threshold and a bit rate and between the second threshold and a bit rate; and
a first determining subunit (424), configured to use the bit rate selected by the selecting subunit (425) as the bit rate of the next streaming media segment to be acquired.

7. The electronic device according to claim 6, wherein the processing unit further comprises:
a presetting subunit (426), configured to preset a mapping table, wherein the preset mapping table is used to represent mappings between the first threshold and a bit rate and between the second threshold and a bit rate.

8. The electronic device according to claim 6, wherein the presetting subunit (426) is specifically configured to:
set a difference between the bit rate corresponding to the first threshold and a bit rate corresponding to the second threshold to a fixed value; or
set an incremental value of the difference between the bit rate corresponding to the first threshold and the bit rate corresponding to the second threshold to a fixed value.

## Patentansprüche

1. Verfahren zum Einstellen der Datenübertragung von Streaming-Medien, umfassend:
Gewinnen (201), durch eine elektronische Vorrichtung, eines Gesamtdauer-Parameters von Streaming-Medien, wobei die Streaming-Medien von wenigstens einem Streaming-Medien-Segment gebildet werden, das noch nicht wiedergegeben wurde;
Bestimmen (202), durch eine elektronische Vorrichtung, gemäß dem Gesamtdauer-Parameter und wenigstens einem voreingestellten Zeitdauerschwellwert, einer Bitrate eines nächsten zu gewinnenden Streaming-Medien-Segments; und
Gewinnen (203), durch eine elektronische Vorrichtung, eines nächsten Streaming-Medien-Segments gemäß der bestimmten Bitrate, wobei
das Gewinnen (201) eines Gesamtdauer-Parameters von Streaming-Medien umfasst:
Gewinnen (301) eines Segmentdauerparameters eines Streaming-Medien-Segments, wenn das Streaming-Medien-Segment gewonnen wird; und
Berechnen (302) des Gesamtdauer-Parameters der Streaming-Medien durch Summieren des Segmentdauerparameters und eines Segmentdauerparameters eines anderen Streaming-Medien-Segments, das gewonnen wurde und noch nicht wiedergegeben wird.

2. Verfahren gemäß Anspruch 1, wobei, wenn die Anzahl der voreingestellten Zeitdauerschwellwerte eins ist, das Bestimmen, gemäß dem Gesamtdauer-Parameter und wenigstens einem voreingestellten Zeitdauerschwellwert, einer Bitrate eines nächsten Streaming-Medien-Segments umfasst:
Bestimmen, ob der Gesamtdauer-Parameter den voreingestellten Zeitdauerschwellwert übersteigt; und
falls der Gesamtdauer-Parameter den voreingestellten Zeitdauerschwellwert übersteigt, wird eines der Folgenden ausgeführt:
Bestimmen einer durchschnittlichen Bitrate aller gewonnenen Streaming-Medien-Segmente als Bitrate des nächsten zu gewinnenden Streaming-Medien-Segments; oder
Bestimmen einer durchschnittlichen Bitrate aller gewonnenen und nicht wiedergegebenen Streaming-Medien-Segmente als Bitrate des nächsten zu gewinnenden Streaming-Medien-Segments; oder
Bestimmen einer Bitrate eines Streaming-Medien-Segments, dessen Bitrate die höchste in einer Medienpräsentationsbeschreibungs(Media Presentation Description, MPD)-Datei ist, als Bitrate des nächsten zu gewinnenden Streaming-Medien-Segments; oder
Bestimmen einer Bitrate, die höher ist als eine Bitrate eines aktuell gewonnenen Streaming-Medien-Segments und dieser am nächsten liegt, als Bitrate des nächsten zu gewinnenden Streaming-Medien-Segments.

3. Verfahren gemäß Anspruch 1, wobei, wenn die Anzahl der voreingestellten Zeitdauerschwellwerte mehr als eins ist, das Bestimmen, gemäß dem Gesamtdauer-Parameter und wenigstens einem voreingestellten Zeitdauerschwellwert, einer Bitrate eines nächsten Streaming-Medien-Segments umfasst:
Bestimmen, ob der Gesamtdauer-Parameter einen ersten Schwellwert übersteigt und einen zweiten Schwellwert nicht übersteigt, wobei der zweite Schwellwert ein Schwellwert ist, der dem ersten Schwellwert benachbart und größer als der erste Schwellwert ist; und
falls der Gesamtdauer-Parameter den ersten Schwellwert übersteigt und den zweiten Schwellwert nicht übersteigt, Auswählen, gemäß einer voreingestellten Zuordnungstabelle, einer Bitrate, die dem ersten Schwellwert entspricht, als Bitrate des nächsten zu gewinnenden Streaming-Medien-Segments, wobei die voreingestellte Zuordnungstabelle dazu dient, Zuordnungen zwischen dem ersten Schwellwert und einer Bitrate sowie zwischen dem zweiten Schwellwert und einer Bitrate darzustellen.

4. Elektronische Vorrichtung, umfassend:
eine Gewinnungseinheit (41), die ausgelegt ist zum Gewinnen eines Gesamtdauer-Parameters von Streaming-Medien, wobei die Streaming-Medien von wenigstens einem Streaming-Medien-Segment gebildet werden, das noch nicht wiedergegeben wird; und
eine Verarbeitungseinheit (42), die ausgelegt ist zum Bestimmen, gemäß dem von der Gewinnungseinheit gewonnenen Gesamtdauer-Parameter und wenigstens einem voreingestellten Zeitdauerschwellwert, einer Bitrate eines nächsten zu gewinnenden Streaming-Medien-Segments; wobei
die Gewinnungseinheit ferner ausgelegt ist zum Gewinnen eines nächsten Streaming-Medien-Segments gemäß der von der Verarbeitungseinheit bestimmten Bitrate, wobei die Gewinnungseinheit umfasst:
eine Gewinnungsuntereinheit (411), die ausgelegt ist zum Gewinnen eines Segmentdauerparameters eines Streaming-Medien-Segments, wenn das Streaming-Medien-Segment gewonnen wird; und
eine Berechnungsuntereinheit (412), die ausgelegt ist zum Berechnen des Gesamtdauer-Parameters der Streaming-Medien durch Summieren des von der Gewinnungsuntereinheit (411) gewonnenen Segmentdauerparameters und eines Segmentdauerparameters eines anderen Streaming-Medien-Segments, das gewonnen wurde und noch nicht wiedergegeben wird.

5. Elektronische Vorrichtung gemäß Anspruch 4, wobei die Verarbeitungseinheit (42) umfasst:
eine Beurteilungsuntereinheit (421), die ausgelegt ist zum Bestimmen, wenn die Anzahl der voreingestellten Zeitdauerschwellwerte eins ist, ob der von der Gewinnungseinheit gewonnene Gesamtdauer-Parameter den voreingestellten Zeitdauerschwellwert übersteigt; und
eine Bestimmungsuntereinheit (422), die ausgelegt ist zum Bestimmen, wenn die Beurteilungsuntereinheit (421) bestimmt, dass der Gesamtdauer-Parameter den voreingestellten Zeitdauerschwellwert übersteigt, einer durchschnittlichen Bitrate aller gewonnenen Streaming-Medien-Segmente als Bitrate des nächsten zu gewinnenden Streaming-Medien-Segments; oder ausgelegt ist zum Bestimmen einer durchschnittlichen Bitrate aller gewonnenen und nicht wiedergegebenen Streaming-Medien-Segmente als Bitrate des nächsten zu gewinnenden Streaming-Medien-Segments; oder ausgelegt ist zum Bestimmen einer Bitrate eines Streaming-Medien-Segments, dessen Bitrate die höchste in einer MPD-Datei ist, als Bitrate des nächsten zu gewinnenden Streaming-Medien-Segments; oder ausgelegt ist zum Bestimmen einer Bitrate, die höher ist als eine Bitrate eines aktuell gewonnenen Streaming-Medien-Segments und dieser am nächsten liegt, als Bitrate des nächsten zu gewinnenden Streaming-Medien-Segments.

6. Elektronische Vorrichtung gemäß Anspruch 4, wobei die Verarbeitungseinheit umfasst:
eine erste Beurteilungsuntereinheit (423), die ausgelegt ist zum Bestimmen, wenn die Anzahl der voreingestellten Zeitdauerschwellwerte mehr als eins ist, ob der von der Gewinnungseinheit gewonnene Gesamtdauer-Parameter einen ersten Schwellwert übersteigt und einen zweiten Schwellwert nicht übersteigt, wobei der zweite Schwellwert ein Schwellwert ist, der dem ersten Schwellwert benachbart und größer als der erste Schwellwert ist;
eine Auswahluntereinheit (425), die ausgelegt ist zum Auswählen, gemäß einer voreingestellten Zuordnungstabelle, wenn die Beurteilungsuntereinheit (421) bestimmt, dass der Gesamtdauer-Parameter einen ersten Schwellwert übersteigt und einen zweiten Schwellwert nicht übersteigt, einer Bitrate, die dem ersten Schwellwert entspricht, wobei die voreingestellte Zuordnungstabelle dazu dient, Zuordnungen zwischen dem ersten Schwellwert und einer Bitrate sowie zwischen dem zweiten Schwellwert und einer Bitrate darzustellen; und
eine erste Bestimmungsuntereinheit (424), die ausgelegt ist zum Verwenden der von der Auswahluntereinheit (425) ausgewählten Bitrate als Bitrate des nächsten zu gewinnenden Streaming-Medien-Segments.

7. Elektronische Vorrichtung gemäß Anspruch 6, wobei die Verarbeitungseinheit ferner umfasst:
eine Voreinstellungsuntereinheit (426), die ausgelegt ist zum Voreinstellen einer Zuordnungstabelle, wobei die voreingestellte Zuordnungstabelle dazu dient, Zuordnungen zwischen dem ersten Schwellwert und einer Bitrate sowie zwischen dem zweiten Schwellwert und einer Bitrate darzustellen.

8. Elektronische Vorrichtung gemäß Anspruch 6, wobei die Voreinstellungsuntereinheit (426) speziell ausgelegt ist zum:
Einstellen einer Differenz zwischen der dem ersten Schwellwert entsprechenden Bitrate und einer dem zweiten Schwellwert entsprechenden Bitrate auf einen festen Wert; oder
Einstellen eines inkrementellen Wertes der Differenz zwischen der dem ersten Schwellwert entsprechenden Bitrate und der dem zweiten Schwellwert entsprechenden Bitrate auf einen festen Wert.

## Revendications

1. Procédé d'ajustement d'une transmission de données multimédia en continu, comprenant :
l'acquisition (201), par un dispositif électronique d'un paramètre de durée totale d'un flux multimédia continu, dans lequel le flux multimédia continu est formé par au moins un segment d'un flux multimédia continu qui n'a pas encore été reproduit ;
la détermination (202) par un dispositif électronique, conformément au paramètre de durée totale et à au moins une limite de durée prédéfinie, d'un débit binaire d'un segment d'un flux multimédia continu suivant à acquérir ; et
l'acquisition (203) par un dispositif électronique d'un segment d'un flux multimédia continu suivant conformément au débit binaire déterminé, dans lequel
l'acquisition (201) d'un paramètre de durée totale d'un flux multimédia continu comprend :
l'acquisition (301) d'un paramètre de durée de segment d'un segment d'un flux multimédia continu lors de l'acquisition du segment d'un flux multimédia continu ; et
le calcul (302) du paramètre de durée totale du flux multimédia continu en cumulant le paramètre de durée de segment et un paramètre de durée de segment d'un autre segment d'un flux multimédia continu qui a été acquis et qui n'est pas encore reproduit.

2. Procédé selon la revendication 1, dans lequel quand le nombre des limites de durée prédéfinies est un, la détermination, conformément au paramètre de durée totale et à au moins une limite de durée prédéfinie, d'un débit binaire d'un segment d'un flux multimédia continu suivant comprend :
la détermination que le paramètre de durée totale dépasse ou non la limite de durée prédéfinie ; et
si le paramètre de durée totale dépasse la limite de durée prédéfinie, l'une quelconque des étapes suivantes est effectuée :
la détermination d'un débit binaire moyen de tous les segments d'un flux multimédia continu qui ont été acquis en tant que débit binaire du segment d'un flux multimédia continu suivant à acquérir ; ou
la détermination d'un débit binaire moyen de tous les segments d'un flux multimédia continu qui ont été acquis et qui ne sont pas reproduits en tant que débit binaire du segment d'un flux multimédia continu suivant à acquérir ; ou
la détermination d'un débit binaire d'un segment d'un flux multimédia continu dont le débit binaire est le plus élevé dans un fichier de description de présentation multimédia MPD en tant que débit binaire du segment d'un flux multimédia continu suivant à acquérir ; ou
la détermination d'un débit binaire qui est supérieur, et le plus proche, à un débit binaire d'un segment d'un flux multimédia continu présentement acquis en tant que débit binaire du segment d'un flux multimédia continu suivant à acquérir.

3. Procédé selon la revendication 1, dans lequel quand le nombre des limites de durée prédéfinies est supérieur à un, la détermination, conformément au paramètre de durée totale et à au moins une limite de durée prédéfinie, d'un débit binaire d'un segment d'un flux multimédia continu suivant comprend :
la détermination du fait de savoir si le paramètre de durée totale dépasse une première limite et s'il ne dépasse pas une seconde limite, dans lequel la seconde limite est une limite adjacente et supérieure à la première limite ; et
si le paramètre de durée totale dépasse la première limite et ne dépasse pas la seconde limite, la sélection, conformément à une table de mappage prédéfinie, d'un débit binaire correspondant à la première limite en tant que débit binaire du segment d'un flux multimédia continu suivant à acquérir, dans lequel la table de mappage prédéfinie sert à représenter des mappages entre la première limite et un débit binaire et entre la seconde limite et un débit binaire.

4. Dispositif électronique, comprenant :
une unité d'acquisition (41), configurée pour acquérir un paramètre de durée totale d'un flux multimédia continu, dans lequel le flux multimédia continu est formé par au moins un segment d'un flux multimédia continu qui n'est pas encore reproduit ; et
une unité de traitement (42), configurée pour déterminer, conformément au paramètre de durée totale acquis par l'unité d'acquisition et à au moins une limite de durée prédéfinie, un débit binaire d'un segment d'un flux multimédia continu suivant à acquérir ; dans lequel
l'unité d'acquisition est configurée en outre pour acquérir un segment d'un flux multimédia continu suivant conformément au débit binaire déterminé par l'unité de traitement, dans lequel l'unité d'acquisition comprend :
une sous-unité d'acquisition (411), configurée pour acquérir un paramètre de durée de segment d'un segment d'un flux multimédia continu lors de l'acquisition du segment d'un flux multimédia continu ; et
une sous-unité de calcul (412), configurée pour calculer le paramètre de durée totale du flux multimédia continu en cumulant le paramètre de durée de segment acquis par la sous-unité d'acquisition (411) et un paramètre de durée de segment d'un autre segment d'un flux multimédia continu qui a été acquis et qui n'est pas encore reproduit.

5. Dispositif électronique selon la revendication 4, dans lequel l'unité de traitement (42) comprend :
une sous-unité de jugement (421), configurée pour déterminer quand le nombre des limites de durée prédéfinies est un, que le paramètre de durée totale acquis par l'unité d'acquisition dépasse ou non la limite de durée prédéfinie ; et
une sous-unité de détermination (422), configurée pour déterminer, quand la sous-unité de jugement (421) détermine que le paramètre de durée totale dépasse la limite de durée prédéfinie, un débit binaire moyen de tous les segments d'un flux multimédia continu qui ont été acquis en tant que débit binaire du segment d'un flux multimédia continu suivant à acquérir ; ou configurée pour déterminer un débit binaire moyen de tous les segments d'un flux multimédia continu qui ont été acquis et qui ne sont pas reproduits en tant que débit binaire du segment d'un flux multimédia continu suivant à acquérir ; ou configurée pour déterminer un débit binaire d'un segment d'un flux multimédia continu dont le débit binaire est le plus élevé dans un fichier MPD en tant que débit binaire du segment d'un flux multimédia continu suivant à acquérir ; ou configurée pour déterminer un débit binaire qui est supérieur, et le plus proche, à un débit binaire d'un segment d'un flux multimédia continu présentement acquis en tant que débit binaire du segment d'un flux multimédia continu suivant à acquérir.

6. Dispositif électronique selon la revendication 4, dans lequel l'unité de traitement comprend :
une première sous-unité de jugement (423), configurée pour déterminer, quand le nombre des limites de durée prédéfinies est supérieur à un, si le paramètre de durée totale acquis par l'unité d'acquisition dépasse une première limite et s'il ne dépasse pas une seconde limite, dans lequel la seconde limite est une limite adjacente et supérieure à la première limite ;
une sous-unité de sélection (425), configurée pour sélectionner, conformément à une table de mappage prédéfinie quand la sous-unité de jugement (421) détermine que le paramètre de durée totale dépasse la première limite et ne dépasse pas la seconde limite, un débit binaire correspondant à la première limite, dans lequel la table de mappage prédéfinie sert à représenter des mappages entre la première limite et un débit binaire et entre la seconde limite et un débit binaire ; et
une première sous-unité de détermination (424), configurée pour utiliser le débit binaire sélectionné par la sous-unité de sélection (425) en tant que débit binaire du segment d'un flux multimédia continu suivant à acquérir.

7. Dispositif électronique selon la revendication 6, dans lequel l'unité de traitement comprend en outre :
une sous-unité de prédéfinition (426), configurée pour prédéfinir une table de mappage, dans lequel la table de mappage prédéfinie sert à représenter des mappages entre la première limite et un débit binaire et entre la seconde limite et un débit binaire.

8. Dispositif électronique selon la revendication 6, dans lequel la sous-unité de prédéfinition (426) est configurée spécifiquement pour :
définir une différence entre le débit binaire correspondant à la première limite et un débit binaire correspondant à la seconde limite à une valeur fixe ; ou
définir une valeur incrémentielle de la différence entre le débit binaire correspondant à la première limite et le débit binaire correspondant à la seconde limite à une valeur fixe.
